(19) Europäisches Patentamt
European Patent Office
Office européen des brevets

(11) EP 1 067 535 A2

## (12) EUROPEAN PATENT APPLICATION

(43) Date of publication:
10.01.2001 Bulletin 2001/02

(51) Int. Cl.$^7$: **G11B 7/24**, G11B 7/007

(21) Application number: 00305480.6

(22) Date of filing: 29.06.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 02.07.1999 JP 18914999

(71) Applicant: **Pioneer Corporation**
**Meguro-ku, Tokyo (JP)**

(72) Inventors:
• **Muramatsu, Eiji,**
**Pioneer Corporation**
**Tokorozawa-shi, Saitama (JP)**
• **Kuroda, Kazuo,**
**Pioneer Corporation**
**Tokorozawa-shi, Saitama (JP)**

(74) Representative: **Haley, Stephen**
**Gill Jennings & Every,**
**Broadgate House,**
**7 Eldon Street**
**London EC2M 7LH (GB)**

### (54) Information recording medium

(57) At the least, a first recording layer 2 and a translucent film layer 3 are laminated in order on a transparent substrate 1 to form a first information recording/reproduction unit; and at the least, a reflective film layer 6 and a second recording layer 5 are laminated in order on a transparent substrate 7 to form a second information recording/reproduction unit. Then, the first and the second information recording/reproduction units are glued together by a transparent bonding layer 4, with the translucent film layer 3 facing the second recording layer 5, so that a two-layer information recording medium is obtained. Further, grooves G and lands L are formed for the first and the second recording layers 2 and 5. The depths of the grooves are substantially equal for the first and the second recording layers 2 and 5, the heights of the lands L are substantially equal for the first and the second recording layers 2 and 5, and the depth of the grooves G are greater than the height of the lands L.

Fig 2

**Description**

The present invention relates to an information recording medium for optical data recording, and relates in particular to an information recording medium having a plurality of layers for the recording of information.

As is well known, for the recording of information today widespread use is made of conventional CDs (Compact Discs), recording media that have large memory capacities.

But recently, DVDs (Digital Video Discs or Digital Versatile Discs) have gained public recognition as information recording media having a larger memory capacity. For while CD media can provide a maximum capacity of approximately 650 MB (megabytes), DVD media, because of their structural characteristics, can accommodate several GB (gigabytes), at the least. It is expected, therefore, that DVDs will constitute the next generation information recording media.

According to the DVD specifications, a single-sided, single-layer DVD having one recording layer, which is currently available on the market, has a maximum recording capacity of about 4.7 GB, and a single-sided, double-layered DVD, which has two layers on one side, has a maximum recording capacity of about 8.7 GB.

DVD-Rs (multisession DVD recordable media), which permit the discontinuous recording of data, are receiving attention as an objective for next-generation DVDs. Since high density recording is required, it is important that information having high reproductivity be recorded, and that information that is recorded be reproduced precisely, i.e., that high quality and reliable DVD-Rs be provided.

Especially for the implementation of a high-density, single-sided double-layer DVD-R on which a large amount of data can be recorded, the structure of a DVD-R is very important because an entering light beam must impinge on and information must be exclusively written on each of the facing, overlapped recording layers.

To resolve these problems, it is one objective of the present invention to provide an information recording medium having a reliable structure.

To achieve the above objective, according to the present invention, an information recording medium comprises:

a first information recording/reproduction unit formed by the sequential lamination on a first transparent substrate of a first recording layer and a second translucent layer, at the least;
a second information recording/reproduction unit formed by the sequential lamination on a second transparent substrate of a second recording layer and a reflection layer, at the least; and
a transparent bonding layer for bonding together the translucent layer and the second, facing recording layer.

According to this arrangement, the first information recording/reproduction unit and the second information recording/reproduction unit are formed separately and are bonded together by the transparent bonding layer so that an information recording medium having two recording layers can be easily obtained.

Further, grooves in which information is written and lands adjacent to the grooves are formed both in and on the first recording layer and the second recording layer. The grooves in the first recording layer and the second recording layer have substantially the same width and are wider than the lands.

According to this arrangement, for the first recording layer and the second recording layer, the optical phase structure in the grooves changes greatly when they are in the recorded state, compared with when they are in the unused state. Therefore, when information is read optically, a difference in amplitudes between a signal obtained from a groove that has been used and a signal obtained from a groove that has not been used is increased, so that information reproduction can be performed appropriately.

Fig. 1 is a vertical cross-sectional view of the essential structure of a DVD-R according to one embodiment of the present invention.
Fig. 2 is a further enlarged vertical cross-sectional view of the essential structure of the DVD-R in Fig. 1.
Fig. 3 is a diagram showing the geometrical structure and the optical phase structure of a first recording layer.
Fig. 4 is a graph showing the characteristic of the DVD-R according to the embodiment.
Fig. 5 is a vertical cross-sectional view of another structure for a DVD-R according to the embodiment.
Fig. 6 is a vertical cross-sectional view of an additional structure for a DVD-R according to the embodiment.
Fig. 7 is a vertical cross-sectional view of one more structure for a DVD-R according to the embodiment.

The preferred embodiment of the present invention will now be described while referring to the accompanying drawings. In this embodiment, an explanation will be given for a multisession recording DVD (hereinafter referred to as a DVD-R) for which information reproduction (information reading) and an information recording (information writing) session have been performed.

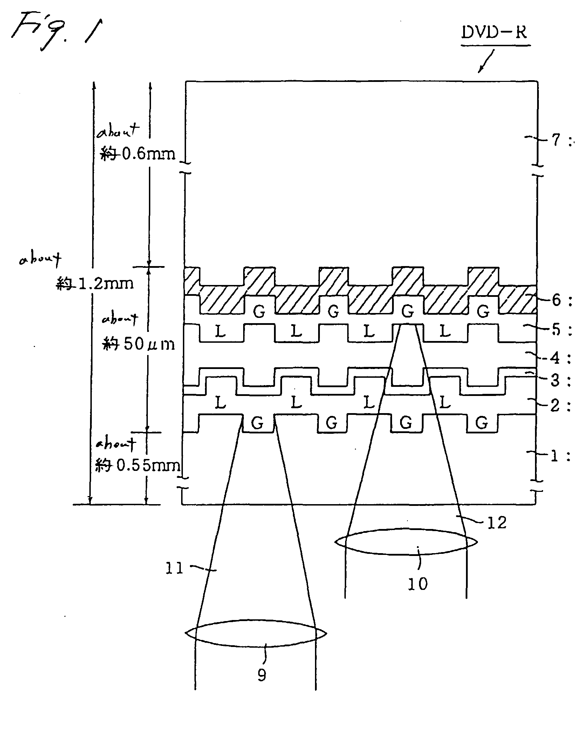

Fig. 1 is a vertical cross-sectional view of the essential structure of a DVD-R according to the embodiment of the present invention. More specifically, the cross-sectional structure shown is part of a disk-shaped DVD-R that is radially cut in the direction of its thickness.

In Fig. 1, the DVD-R has an integral structure wherein a first recording layer 2, a translucent film layer 3, a bonding layer 4, a second recording layer 5, a reflective film layer 6 and a second transparent substrate are laminated on a first transparent substrate 1 that a light beam, which will be described later, enters. The overall thickness is approximately 1.2 mm.

For the transparent substrate 1, which is approximately 0.55 mm thick, a hard material, such as transparent hard plastic, is used that transmits light beams 11 and 12, for recording and reading (hereinafter these beams are generally referred to simply as light beams), that respectively enter via object lenses 9 and 10, which are provided for an optical pickup (not shown).

In Fig. 1 the light beams 11 and 12 enter separately, via the two object lenses 9 and 10. Actually, however, the optical pickup employs one object lens to adjust the focus for the first and second recording layers 5 and 6, so that coherent light beams can enter.

The first recording layer 2 is deposited by using an organic color material, and is integrally laminated with the transparent substrate 1.

The translucent film layer 3 is formed of a dielectric thin film such as SiC (silicon carbide), which is translucent relative to the light beams 11 and 12, or Au (gold), and is integrally laminated with the first recording layer 2.

The transparent substrate 1, the first recording layer 2 and the translucent film layer 4 constitute a first information recording/reproduction unit (not denoted by a numeral reference).

For the transparent substrate 7, which is approximately 0.6 mm thick, a hard material is used, such as the hard plastic of which the transparent substrate 1 is made.

The reflective film layer 6 is formed of Al (aluminum), which can fully reflect the light beams 11 and 12 that enter via the object lenses 9 and 10.

The second recording layer 5, as is the first recording layer 2, is deposited by using an organic color material, and is integrally laminated with the reflective film layer 6.

The transparent substrate 7, the reflective film layer 6 and the second recording layer 5 constitute a second information recording/reproduction unit (not denoted by a reference numeral).

The first and the second information recording/reproduction units are glued together; the translucent film layer 3 and the second recording layer 5 facing each other with the bonding layer, which has a predetermined thickness, sandwiched in between.

To prepare the bonding layer 4, a transparent resin that will permit the transmission of the light beams 11 and 12, e.g., an ultraviolet-curing resin composed of a two-liquid mixture, is used to form a thin film, transparent sheet, a so-called tack sheet, both sides of which are coated with a tacky acrylic agent whose tackiness is increased by the addition of a solvent. This tack sheet, which constitutes the bonding layer 4, is then employed to glue the translucent film layer 3 to the second recording layer 5.

The overall thickness measured from the first recording layer 2 to the reflective film layer 6 is set at approximately 50 μm.

In this embodiment, grooves G and lands L are formed in and on the recording layer 2, and for data recording, or for data reproduction, are extended spirally in the direction in which the light beam 11 scans (the so-called track direction). The grooves G of the first recording layer 2 are arranged radially and are raised relative to the transparent substrate 1 (downward in Fig. 1), while the lands L are recessed relative to the transparent substrate 1 (downward in Fig. 1), and away from the grooves G. Although not shown, wobbles are formed on the side walls of the lands L to specify the physical format.

The grooves G and the lands L of the second recording layer 5 are extended spirally along the track, facing the grooves G and the lands L of the first recording layer 2, and the raised and recessed phase structure is inverted.

That is, the grooves G of the second recording layer 5 are arrayed radially, and are raised relative to the transparent substrate 7 (upward in Fig. 1), while the lands L are recessed relative to the transparent substrate 7 (upward in Fig. 1) and away from the grooves G. Wobbles are also formed on the side walls of the lands L of the second recording layer 5 to specify the physical format.

Since the phase structures of the grooves G and the lands L of the first and second recording layers 2 and 5 are inverted, during a data recording or a data reproduction process, the light beam 11 impinges on the raised grooves of the first recording layer 2, and the light beam 12 enters the recessed grooves G of the second recording layer 5.

The processing for fabricating the thus structured DVD-R will now be described.

First, the first information recording/reproduction unit and the second information recording/reproduction unit are separately formed as intermediate products.

Specifically, in the process for manufacturing the first information recording/reproduction unit, to obtain the grooves G, lithography is used to form a spiral groove in the surface of the transparent substrate 1. Then, spin coating is used to form the first recording layer 2 on the transparent substrate 1. As a result, the grooves G are obtained by using an organic color material that is retained in the root of the spiral groove, and the lands L are obtained by using an organic color material that is attached to the crests of the lands L between the grooves G.

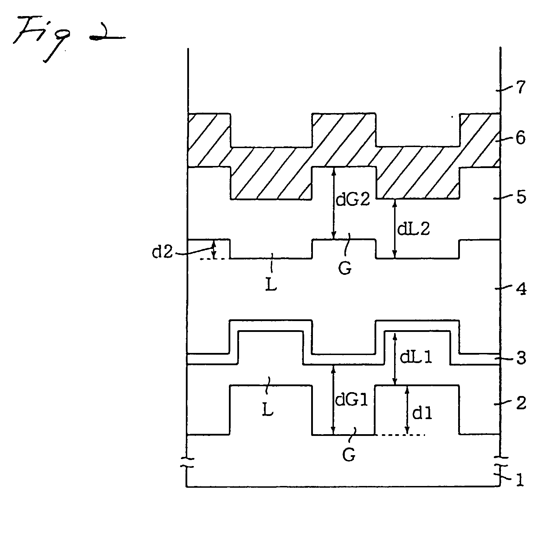

As in the enlarged diagram in Fig. 2, the thickness dG1 for a groove G and the thickness dL1 for a land L are set so as to satisfy dG1 > dL1. This relationship dG1 > dL1 is automatically established by adjusting the rotational speed used for the spin coating and the density of the organic color material.

Next, sputtering is used to deposit the translucent film layer 3 on the first recording layer 2, and the first information recording/reproduction unit is obtained.

In the process for manufacturing the second information recording/reproduction unit, to obtain the grooves G, lithography is used to form a spiral groove in the surface of the transparent substrate 7.

Then, sputtering is used to deposit the reflective film layer 6 on the surface of the transparent substrate 7, and is also used to deposit the second recording layer 5 on the reflective film layer 6. Thus, the grooves G are obtained by using the organic color material that is retained in the root of the spiral groove in the reflective film layer 6, while the lands L are obtained by using the organic color material that is attached to the crests of the lands L between the grooves G.

The thickness dG2 for a groove G and the thickness dL2 for a land L are set so as to satisfy dG2 > dL2. This relationship dG2 > dL2 is also automatically established by adjusting the rotational speed used for the spin coating and the density of the organic color material.

Following this, the thus obtained first and second information recording/reproduction units are bonded together by placing the ultraviolet curing resin or the tack sheet between the translucent film layer 3 and the second recording layer 5. As a result, the DVD-R is obtained.

It should be noted that the thickness dG1 for a groove G of the first recording layer 2 is substantially equal to the thickness dG2 for a groove G of the second recording layer 5, and that the thickness dL1 for a land L of the first recording layer 2 is also substantially equal to the thickness dL2 for a land L of the second recording layer 5.

More specifically, the thicknesses dG1 and dL1 for a groove G and a land L of the first recording layer 2 are respectively set as approximately dG1 = 0.1738 $\mu$m and dL1 = 0.1039 $\mu$m, and the height d1 from the bottom of a land L to the top of a groove G is set as approximately d1 = 0.14 $\mu$m.

Further, the thicknesses dG2 and dL2 for a groove G and a land L of the second recording layer 5 are respectively set as approximately dG2 = 0.1738 $\mu$m and dL2 = 0.1196 $\mu$m, and the height d2 from the bottom of a land L to the top of a groove G is set as approximately d2 = 0.14 $\mu$m. In other words, substantially the same geometrical cross-sectional view in the direction of the thickness is employed for the first and the second recording layers 2 and 5.

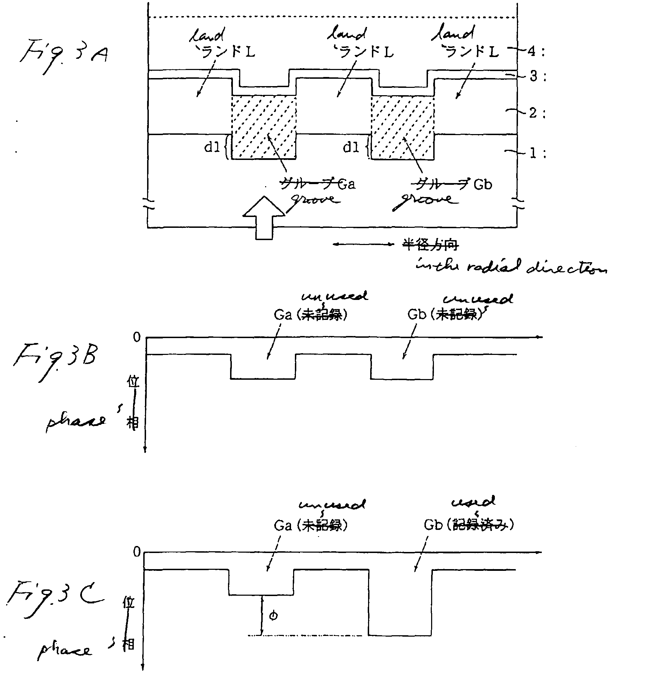

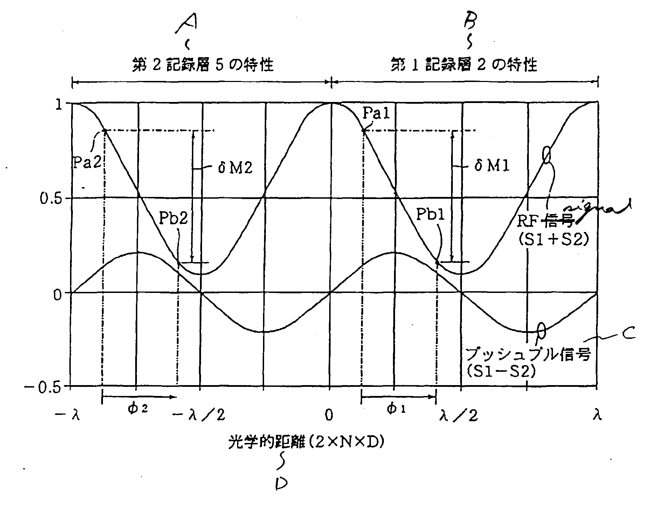

The results obtained from an evaluation of the DVD-R will be theoretically explained while referring to Figs. 3A to 3C and 4. Fig. 3A is a further enlarged cross-sectional view of the geometrical structure of one part of the first recording layer 2, and Figs. 3B and 3C are diagrams showing the optical phase structure. Fig. 4 is a graph showing the optical characteristic obtained for a groove G of the first recording layer 2 by using an RF signal and a push-pull signal.

For this embodiment, light reflected when, for reading data, the light beam 11 was used to irradiate the groove G was received by a photodetector that had two separate light-receiving regions. The sum (S1 + S2) of the signals S1 and S2 that were detected and output by the light-receiving regions was defined as an RF signal, and a difference (S1 - S2) between the detection signals S1 and S2 was defined as a push-pull signal.

In Fig. 3A, when two example grooves Ga and Gb had not been used, there was no optical change in the organic color material. Therefore, when the light beam 11 for data reading passed through the grooves Ga and Gb, and was reflected by the translucent film layer 3 and returned through the grooves Ga and Gb to the transparent substrate 1, as is shown in Fig. 3b, the optical phase of the groove Ga equaled that of the groove Gb.

When, however, the groove Ga had not been used and the groove Gb had been used, as is shown in Fig. 3C, the optical phase of the groove Gb was changed. Thus, an optical phase difference $\varphi$ occurred between the grooves Ga and Gb.

That is, since the organic material of the previously used groove Gb was changed so that for data writing the reflectance was reduced when the thermal energy from the light beam 11 was received, the optical phase difference $\varphi$ occurred.

Now, assuming that the wavelength of the light beam 11 is $\lambda$, a constant N is the effective refractive index of the transparent substrate 1, and a variable D is the distance to the transparent substrate 1 while the face of the land L nearest the transparent substrate 1 is used as a reference position. The optical distance in the optical phase structure is represented as N x D, and the optical phase difference $\varphi$ that is provided, at the wavefront of the light beam, by the reflection is represented as $\varphi = 4 \times \pi \times N \times D/\lambda$. Further, the optical distance travelled from the point at which the light beam 11 entered the groove G until it was reflected and returned is represented as $2 \times N \times D$.

The simulation was performed for the amplitudes of the RF signal and the push-pull signal by employing, as parameters, the optical distances (optical distance travelled from the entrance point to the return) $2 \times N \times D$ for the light beam 11 for the previously unused groove Ga and the previously used groove Gb. As a result, the characteristic was obtained in a range for which, in Fig. 4, $0 \leq 2 \times N \times D \leq \lambda$ is established as the optical distance. The changes in the amplitudes of the RF signal and the push-pull signal were normalized based on the maximum amplitude of the RF signal.

In Fig. 4, the amplitude Pa1 of the RF signal is a value obtained for the previously unused groove Ga when the thicknesses dG1 and dL1 of the groove G and the land L of the first recording layer 2 were respectively set as approximately dG1 = 0.1738 $\mu$m and dL1 = 0.1039 $\mu$m, and the height d1 from the bottom of the land L to the top of the groove G was set as approximately d1 = 0.14 $\mu$m. The amplitude Pb1 of the RF signal was the value obtained for the previously used groove Gb.

Further, an absolute value $\delta$M1 (= |Pa1 - Pb1| ) of the difference between the amplitudes Pa1 and Pb1 served as the signal amplitude for recorded information.

As is apparent from Fig. 4, when the thickness dG1 of the groove G and the thickness dL1 of the land L are set so that they satisfy dG1 > dL1, the optical phase difference $\varphi$ ($\varphi$1) occurs between the previously unused groove Ga and the previously used groove Gb, and the absolute value $\delta$M1 of the difference is increased. Therefore, based on the RF signal, the previously unused groove Ga and the previously used groove Gb can be easily identified, and the precise reproduction of data can be performed.

In addition, since the amplitude of the push-pull signal is also greatly changed, precise servo tracking based on the push-pull signal can be performed by controlling the object lens 9.

When a similar simulation was performed for the second recording layer 5, the characteristic was obtained in a range wherein $-\lambda \leq 2 \times N \times D \leq 0$ was established for the optical distance in Fig. 4. It should be noted that the changes in the amplitudes of the RF signal and the push-pull signal were normalized, based on the maximum amplitude of the RF signal.

In Fig. 4, the amplitude Pa2 of the RF signal is a value obtained by the previously unused groove Ga when the thicknesses dG1 and dL1 of the groove G and the land L of the second recording layer 5 were respectively set as approximately dG2 = 0.1738 $\mu$m and dL2 = 0.1196 $\mu$m, and the height d2 from the bottom of the land L to the top of the groove G was set as approximately d2 = 0.14 $\mu$m. The amplitude Pb2 of the RF signal is a value obtained for the previously used groove Gb.

Further, an absolute value $\delta$M2 (= |Pa2 - Pb2| ) for the difference between the amplitudes Pa2 and Pb2 serves as the signal amplitude for recorded information.

Therefore, when the thickness dG2 at the groove G and the thickness dL2 at the land L are set so as to satisfy dG2 > dL2, the optical phase difference $\varphi$ ($\varphi$2) occurs between the previously unused groove Ga and the previously used groove Gb, and the absolute value $\delta$M2 of the difference is increased. Therefore, based on the RF signal, the previously unused groove Ga and the previously used groove Gb can be easily identified, and the precise reproduction of data can be performed.

In addition, since the amplitude of the push-pull signal is also greatly changed, precise servo tracking based on the push-pull signal can be performed by controlling the object lens 10.

Furthermore, as is shown in Fig. 4, the RF signal and the push-pull signal obtained for the first recording layer 2 are shifted in phase only 90° from those obtained for the second recording layer 5. Therefore, even when substantially the same geometrical cross-section structure is employed in the direction of the thicknesses of the first recording layer 2 and the second recording layer 5, the RF signal and the push-pull signal for the first and second recording layers 2 and 5 can be precisely obtained.

As is described above, in this embodiment, since the relationships dG1 > dL1 and dG2 > dL2 are established between the thicknesses dG1 and dG2 of the grooves G and the thicknesses dL1 and dL2 of the lands L of the first and the second recording layers 2 and 5, the recorded information can be precisely reproduced, and accordingly, a DVD-R having a high density can be provided.

Since the raising and recessing phases of the thicknesses of dG1 and dG2 for the grooves G are the reverse of those for of the thicknesses dL1 and dL2 of the lands L, the information recorded on the first and the second recording layers 2 and 5 can be read without crosstalk occurring. Accordingly, a reliable DVD-R can be provided for which the high density recording of data and the high quality reproduction of information are enabled.

Furthermore, when the geometrical structure is set for the grooves G and the lands L of the first and second recording layers 2 and 5, this structure improves the precision with which information is read and written. Thus, when the first information recording/reproduction unit is glued to the second information recording/reproduction unit by the bonding layer 4, the accuracy with which the gluing process is performed does not greatly affect the precision with which information is read and written. Therefore, a two-layer DVD-R for which high density recording is enabled can be manufactured easily.

Specific numerical values are employed for the thicknesses dG1 and dG2 at the grooves G and the thicknesses dL12 and dL2 at the lands L for the first and the second recording layers 2 and 5, and the heights d1 and d2 from the bottoms of the lands L to the tops of the grooves G. However, these values are merely examples used for this embodiment, and other values may be employed. That is, the thicknesses dG1 and dG2 at the grooves G of the first and second recording layers 2 and 5 and the thicknesses dL1 and dL2 at the lands L need only be set so as to establish dG1 > dL1 and dG2 > dL2, and further, the reverse raised and recessed structure need only be employed for the thicknesses dG1 and dG2 at the grooves G and the thicknesses dL1 and dL2 at the lands L.

These example numerical values are supported by a theoretical consideration that will now be described. The theoretical consideration will be explained while referring to the structure in Figs. 2 and 3.

Through experimentation, it was found that the change in the optical distance in a groove Gb in which data were recorded by the light beam was D = 0.055 μm, and that the height at a previously unused groove Ga was D = 0.025 μm. Thus, when $n_d$ denotes the refractive index of the organic color material, and d1 denotes the thickness of the transparent substrate 1 at the portion that corresponds to the height at a groove G, for the first recording layer 2, the optical distance between the groove G and a land L is represented as

$$N \times d1 + n_d \times dL1 - n_d \times dG1 = N \times D = 1.58 \times 0.025.$$

If the refractive index $n_d$ is 2.6 when data are not recorded on the organic color material, and is 2.1 when data are recorded on the material,

$$dG1 \times (2.6 - 2.1) = N \times d = 1.58 \times 0.55.$$

Therefore, the thickness dG1 at the groove G is dG1 = 0.1738 μm. And if the thickness d1 = 0.14 μm, dL1 = 0.1039 μm is obtained.

Further, when $n_d$ denotes the refractive index of the organic color material, N' denotes the refractive index of the transparent bonding layer 4, while d2 denotes the thickness of the bonding layer 4 at the portion that corresponds to the height of the groove G, and the optical distance between the groove G and the land L of the second recording layer 5 is represented as

$$n_d \times dL2 - n_d \times dG2 - N' \times (d2 + dL2 - dG2).$$

To obtain the optical phase (a phase corresponding to the amplitude Pa2 in Fig. 4) of the previously unused groove G using the optical distance,

$$n_d \times dL2 - n_d \times dG2 - N' \times (d2 + dL2 - dG2) = N \times D = 1.58 \times (-0.175).$$

When the thickness d2 of the bonding layer 4 is set equal to the thickness d1 of the transparent substrate 1, and N' = N = 1.58 , in accordance with this relationship,

$$dL2 - dG2 = -0.0542$$

must be satisfied. And assuming that a change in the optical distance D, which occurs when information is recorded in the groove G of the second recording layer 5, is 0.055 μm, dL2 = 0.1196 μm and the numerical values for the individual portions of the first and the second recording layers 2 and 5 are also theoretically appropriate.

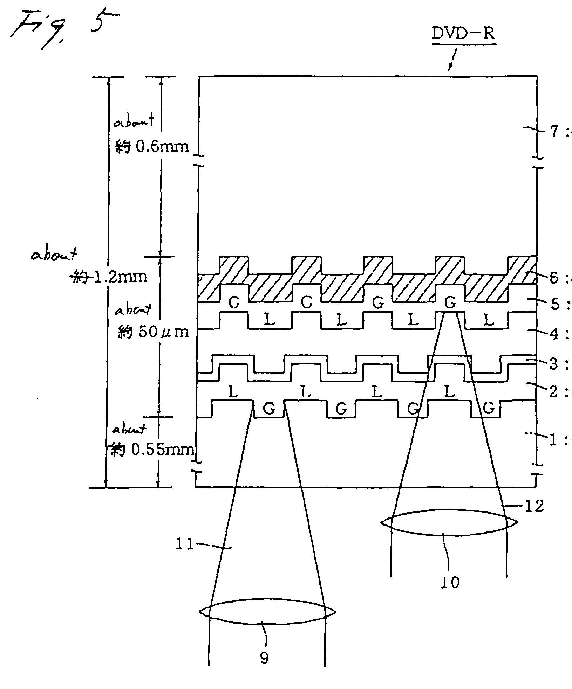

As is shown in Fig. 1, in this embodiment, while the geometrical raising and recessing structure of the grooves G and the lands L is inverted between the first and the second recording layers 2 and 5, the phases of the radial positions of the grooves G and the lands L of the first and the second recording layers 2 and 5 are the same in the incident direction of the light beams 11 and 12. However, the present invention is not limited to this structure. As is shown in Fig. 5, the phase of the radial positions of the grooves G and the lands L of the first and the second recording layers 2 and 5 may be shifted 90° in the incident direction of the light beams 11 and 12. In this case, however, the geometrical raising and recessing structure of the grooves G and the lands L should again be inverted between the first and the second recording layers 2 and 5.

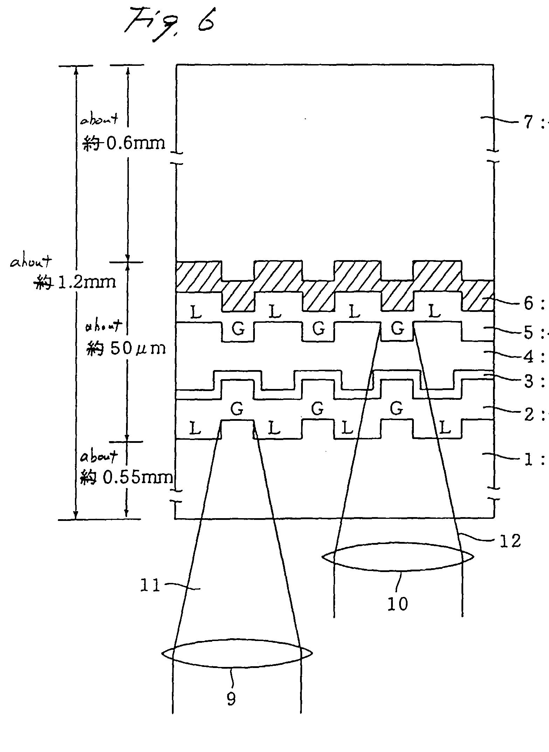

Further, as is shown in Fig. 6, facing the transparent substrate 1, the grooves G of the first recording layer 2 may be recessed and the grooves G of the second recording layer 5 may be raised, while the phase of the radially located grooves G of the first and the second recording layers 2 and 5 may be the same.

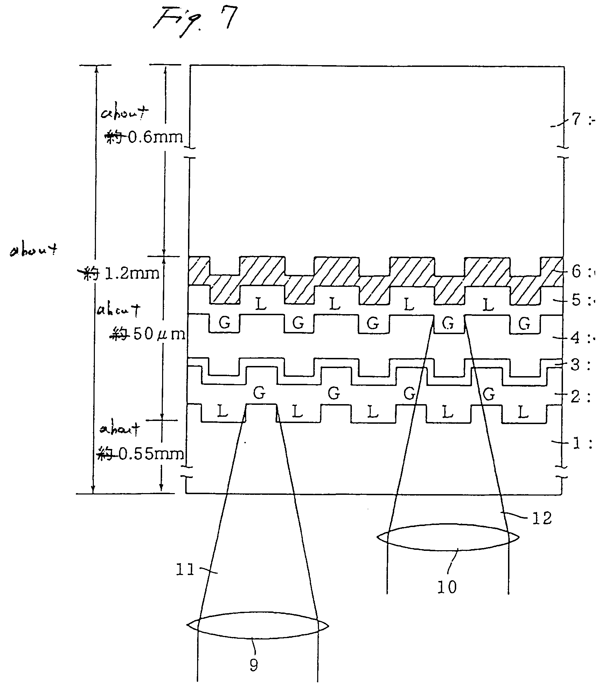

As is shown in Fig. 7, facing the transparent substrate 1, the grooves G of the first recording layer 2 may be recessed and the grooves G of the second recording layer 5 may be raised, while the phase of the grooves G of the first and the second recording layers 2 and 5 may be radially shifted 90°.

In this embodiment, a DVD-R has been explained; however, the present invention can be applied for a two-layer rewritable DVD-RW or a DVD-RAM.

As is described above, the information recording medium comprises: a first information recording/reproduction unit, formed by sequentially laminating, at the least, a first recording layer and a translucent layer on a first transparent substrate; a second information recording/reproduction unit, formed by sequentially laminating, at the least, a reflection layer and a second recording layer on a second transparent substrate; and a transparent bonding layer, for bonding together, facing each other, the translucent layer and the second recording layer. Therefore, when the first and second information recording/reproduction units have been formed separately and are thereafter glued together using the transparent bonding layer, an information recording medium having two layers can be easily provided.

Further, the grooves for the writing of information and the lands that are adjacent to them are formed in both the first recording layer and the first recording layer. The grooves, which for both the first recording layer and the second recording layer have substantially the same thicknesses, are thicker than the lands, and thus, since between grooves that are unused and grooves that are used there is a great change in the optical phase structures of the grooves of the first and the second recording layers, information can be reproduced appropriately. As a result, a reliable information recording medium can be provided for which high-density recording is enabled.

[Fig. 4]

A:      characteristic of second recording layer 5
B:      characteristic of first recording layer 2
C:      push-pull signal (S1 - S2)
D:      optical distance (2 x N x D)

**Claims**

1.  An information recording medium comprising:

    a first information recording/reproduction unit formed by sequentially laminating on a first transparent substrate a first recording layer and a translucent layer, at the least;
    a second information recording/reproduction unit formed by sequentially laminating on a second transparent substrate a reflection layer and a second recording layer, at the least; and
    a transparent bonding layer for bonding said translucent layer and said second recording layer facing each other.

2.  The information recording medium according to claim 1, wherein

    grooves for writing information, and lands adjacent to said grooves, are formed in and on said first recording layer and said second recording layer; and wherein
    said grooves in said first recording layer and in said second recording layer have substantially the same thickness, while said grooves are thicker than said lands.

3.  The information recording medium according to claim 2, wherein

    said grooves and said lands formed in and on said first recording layer have a phase substantially the same in the radial direction as have said grooves and said lands formed in and on said second recording layer.

4.  The information recording medium according to claim 2, wherein

    said grooves and said lands formed in and on said first recording layer have a phase substantially the opposite in the radial direction as have said grooves and said lands formed in and on said second recording layer.

5.  The information recording medium according to claim 2, where in

    said grooves in said first recording layer are recessed toward said first transparent substrate and away from said lands on said first recording layer; and wherein
    said grooves in said second recording layer are raised toward said first transparent substrate and away from said lands on said second recording layer.

6.  The information recording medium according to claim 2, wherein

said grooves in said first recording layer are extended upward toward said first transparent substrate and are elevated relative to said lands on said first recording layer; and wherein

said grooves in said second recording layer are retracted toward said first transparent substrate and are recessed relative to said lands on said second recording layer.

Fig. 1

DVD−R

Fig 2

Fig. 3A

land
ランド L — 4:
land
ランド L
land
ランド L
— 3:
— 2:
d1
d1
— 1:
グループ Ga
groove
グループ Gb
groove

半径方向
in the radial direction

Fig 3B

phase 位相

0

uncused
Ga（未記録）
uncused
Gb（未記録）

Fig 3C

phase 位相

0

uncused
Ga（未記録）
used
Gb（記録済み）

φ

$A$

$B$

第2記録層5の特性

第1記録層2の特性

Pa2

Pa1

δM2

δM1

Pb2

Pb1

RF信号 signal
(S1+S2)

プッシュブル信号
(S1-S2)

C

$-\lambda$

$\phi 2$

$-\lambda／2$

0

$\phi 1$

$\lambda／2$

$\lambda$

光学的距離(2×N×D)

$D$

Fig 5

DVD-R

about
約 0.6mm

about
約 1.2mm

about
約 50 μm

about
約 0.55mm

7 :

6 :
G          G          G          G
L          L          L          L          5 :

4 :

3 :

2 :
L          L          L          L
G          G          G          G          1 :

12

11

10

9

Fig. 6

Fig. 7

about
約 0.6mm

about
約 1.2mm

about
約 50μm

about
約 0.55mm

about

7 :

6 :
5 :
4 :
3 :
2 :
1 :

L  L  L  L

G  G  G  G  G

G  G  G  G

L  G  L  G  L  G  L  G  L

12

11

10

9